# EUROPEAN PATENT APPLICATION

(11) **EP 4 653 252 A1**
(43) Date of publication of application: **26.11.2025**
(21) Application number: 25158798.6
(22) Date of filing: 19.02.2025
(51) Int. Cl.: B60N 2/58

(54) **SEAT ASSEMBLY AND METHOD OF ASSEMBLY**

(30) Priority: 22.05.2024 US 202418670888
(71) Applicant: Lear Corporation, Southfield, MI 48033 (US)
(72) Inventor: Kuhn, Michael, Waterford, MI, 48328 (US); Swikoski, Lisa, West Bloomfield, MI, 48324 (US); Karges, Mark, Macomb, MI, 48044 (US); Hallock, Joshua, Warren, MI, 48088 (US); Brudzynsky, Michelle, Farmington Hills, MI, 48331 (US); Johnson, Christopher D., Novi, MI, 48377 (US)
(74) Representative: Grünecker Patent- und Rechtsanwälte PartG mbB

(57) **Abstract**

A seat assembly and method of manufacture. The seat assembly comprises a cushion, a carrier structure, and a trim cover. The cushion comprises a mesh member comprising a set of filaments of polymeric material. At least two members of the set of filaments are looped and bonded to each other. The trim cover is disposed on the cushion and is secured to the carrier structure.

## Description

### TECHNICAL FIELD

This relates to a seat assembly and a method of assembly.

### BRIEF DESCRIPTION OF THE DRAWINGS

Figure 1 is a perspective view of an example of a seat assembly including a filament mesh structure.
Figure 2 is schematic view of an example of a manufacturing system for making the filament mesh structure.
Figure 3 is a magnified view of an example of filament mesh structure.
Figure 4 is a plan view of an example of a carrier structure and a cushion of the seat assembly disposed on the carrier structure.
Figure 5 is a plan view of the carrier structure of Figure 4.
Figure 6 is a flowchart of a method of making of making a seat assembly.
Figure 7 is a flowchart of a method of securing a trim cover to the carrier structure.
Figures 8-10 illustrate an example of the method of assembly in which a trim cover is indirectly secured to the carrier structure.
Figure 11-12 illustrate another example of the method of assembly in which a trim cover is indirectly secured to the carrier structure.
Figures 13-14 illustrate another example of the method of assembly in which a trim cover is directly secured to the carrier structure.

### DETAILED DESCRIPTION

Reference will now be made in detail to embodiments, examples of which are illustrated in the accompanying drawings. In the following detailed description, numerous specific details are set forth in order to provide a thorough understanding of the various described embodiments. However, it will be apparent to one of ordinary skill in the art that the various described embodiments may be practiced without these specific details. In other instances, well-known methods, procedures, components, circuits, and networks have not been described in detail so as not to unnecessarily obscure aspects of the embodiments.

It is to be understood that the disclosed embodiments are merely exemplary and that various and altemative forms are possible. The figures are not necessarily to scale; some features may be exaggerated or minimized to show details of particular components. Therefore, specific structural and functional details disclosed herein are not to be interpreted as limiting, but merely as a representative basis for teaching one skilled in the art to variously employ embodiments according to the disclosure.

"One or more" includes a function being performed by one element, a function being performed by more than one element, *e.g.,* in a distributed fashion, several functions being performed by one element, several functions being performed by several elements, or any combination of the above.

It will also be understood that, although the terms first, second, etc. are, in some instances, used herein to describe various elements, these elements should not be limited by these terms. These terms are only used to distinguish one element from another. For example, a first contact could be termed a second contact, and, similarly, a second contact could be termed a first contact, without departing from the scope of the various described embodiments. The first contact and the second contact are both contacts, but they are not the same contact.

The terminology used in the description of the various described embodiments herein is for the purpose of describing particular embodiments only and is not intended to be limiting. As used in the description of the various described embodiments and the appended claims, the singular forms "a" and "an" and "the" are intended to include the plural forms as well, unless the context clearly indicates otherwise. It will also be understood that the term "and/or" as used herein refers to and encompasses any and all possible combinations of one or more of the associated listed items. It will be further understood that the terms "includes," "including," "comprises," and/or "comprising" when used in this specification, specify the presence of stated features, integers, steps, operations, elements, and/or components, but do not preclude the presence or addition of one or more other features, integers, steps, operations, elements, components, and/or groups thereof.

As used herein, the term "if" is, optionally, construed to mean "when" or "upon" or "in response to determining" or "in response to detecting," depending on the context. Similarly, the phrase "if it is determined" or "if [a stated condition or event] is detected" is, optionally, construed to mean "upon determining" or "in response to determining" or "upon detecting [the stated condition or event]" or "in response to detecting [the stated condition or event]," depending on the context.

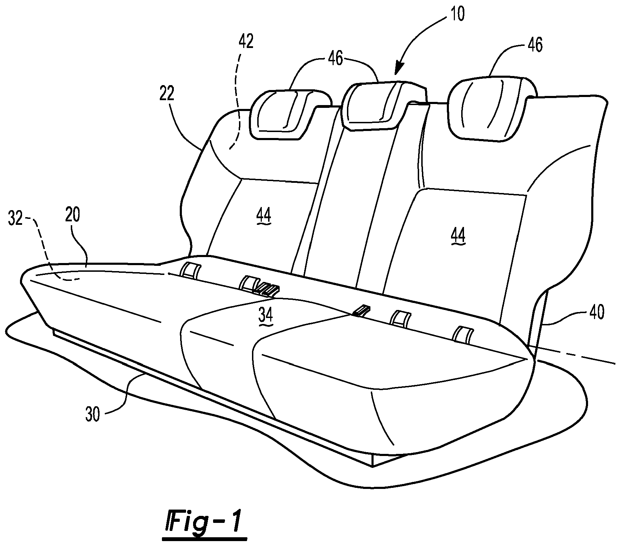

Referring to Figure 1, an example of a seat assembly 10 is shown. In some embodiments, the seat assembly 10 is a vehicle seat assembly, such as for a land vehicle like a car, truck, bus, or the like, or for a non-land vehicle like aircraft or watercraft. For example, a seat assembly 10 for a land vehicle may be shaped and sized as a front row driver or passenger seat, a second, third, or other rear row seat, and may include bucket-style seats, bench-style seats, or other seat styles. Furthermore, the seat assembly 10 may be a non-stowable seat or a stowable seat that may be foldable and stowable in a cavity in the vehicle floor. Additionally, the seat assembly 10 may be configured for non-vehicle applications such as furniture.

In the configuration shown in Figure 1, the seat assembly 10 includes a seat bottom 20 and a seat back 22. It is contemplated that the seat back 22 may be omitted in some configurations, such as when the seat assembly 10 is configured as a motorcycle seat or stool.

The seat bottom 20 is configured to receive a seated occupant and support the pelvis and thighs of the seat occupant. The seat bottom 20 includes a seat bottom frame 30, a cushion 32, and a trim cover 34.

The seat bottom frame 30 is a structure that supports the cushion 32. The seat bottom frame 30 includes one or more structural members and may be made of any suitable material, such as a metal alloy, polymeric material, fiber reinforced polymeric material, or combinations thereof. In some configurations, the seat bottom frame 30 includes a panel, seat pan, suspension mat, or suspension wires upon which the cushion 32 is disposed.

The cushion 32 is disposed on the seat bottom frame 30. The cushion 32 is made of a compliant material that supports the seat occupant and distributes load forces from the seat occupant to the seat bottom frame 30. The cushion 32 and associated methods of manufacture will be discussed in more detail below.

The trim cover 34 covers at least a portion of the cushion 32. The trim cover 34 provides one or more visible exterior surfaces of the seat back 22 and may be disposed on the cushion 32. The seat occupant may be disposed on the trim cover 34 when seated upon the seat assembly 10. The trim cover 34 is made of any suitable material or materials, such as fabric, leather, leatherette, vinyl, or combinations thereof. The trim cover 34 may include a plurality of trim panels that are assembled in any suitable manner, such as by fusing or stitching. The trim cover 34 is attached to the seat bottom frame 30, the cushion 32, or both. For example, the trim cover 34 may include trim attachment features that are attached to the seat bottom frame 30, the cushion 32, or both, to inhibit removal of the trim cover 34 and help conform the trim cover 34 to the contour of the seat bottom frame 30, the cushion 32, or both.

The seat back 22 is configured to support the back of a seated occupant. The seat back 22 is disposed adjacent to the seat bottom 20. For example, the seat back 22 may be disposed above the seat bottom 20 and near the rear side of the seat bottom 20. The seat back 22 extends in a generally upward direction away from the seat bottom 20. In some configurations, the seat back 22 is mounted to the seat bottom 20 and may be pivotable with respect to the seat bottom 20. In other configurations, the seat back 22 is not mounted to the seat bottom 20. For instance, a vehicle seat back may be mounted to the vehicle body structure, such as in some second row seat assemblies. The seat back 22 includes a seat back frame 40, a cushion 42, a trim cover 44, and optionally a head restraint 46.

The seat back frame 40 is a structure that supports the cushion 42. The seat back frame 40 includes one or more structural members and may be made of any suitable material, such as a metal alloy, polymeric material, fiber reinforced polymeric material, or combinations thereof. In some configurations, the seat back frame 40 includes a panel, pan, suspension mat, or suspension wires upon which the cushion 42 is disposed. It is also contemplated that the seat back frame 40 may be integrally formed with the seat bottom frame 30 in some configurations.

The cushion 42 is disposed on the seat back frame 40. The cushion 42 is made of a compliant material that supports the seat occupant and distributes load forces from the seat occupant to the seat back frame 40. It is contemplated that the cushion 42 may be integrally formed with the cushion 32 of the seat bottom 20 or may be separate from the cushion 32 of the seat bottom 20. The cushion 42 and associated methods of manufacture will be discussed in more detail below.

The trim cover 44 covers at least a portion of the cushion 42. The trim cover 44 provides one or more visible exterior surfaces of the seat back 22 and may be disposed on the cushion 42. The seat occupant may be disposed on the trim cover 44 when seated upon the seat assembly 10. The trim cover 44 is made of any suitable material or materials, such as fabric, leather, leatherette, vinyl, or combinations thereof. The trim cover 44 may include one trim panel or a plurality of trim panels that are assembled in any suitable manner, such as by fusing or stitching. The trim cover 44 is attached to the seat back frame 40, the cushion 42, or both. For example, the trim cover 44 may include trim attachment features that are attached to the seat back frame 40, the cushion 42, or both, to inhibit removal of the trim cover 44 and help conform the trim cover 44 to the contour of the seat back frame 40, the cushion 42, or both.

The head restraint 46, if provided, is configured to support the head of a seat occupant. The head restraint 46 is disposed at the top of the seat back 22 or at an end of the seat back 22 that is disposed opposite the seat bottom 20. The head restraint 46 may be moveable in one or more directions with respect to the seat back 22 or may be integrally formed with the seat back 22.

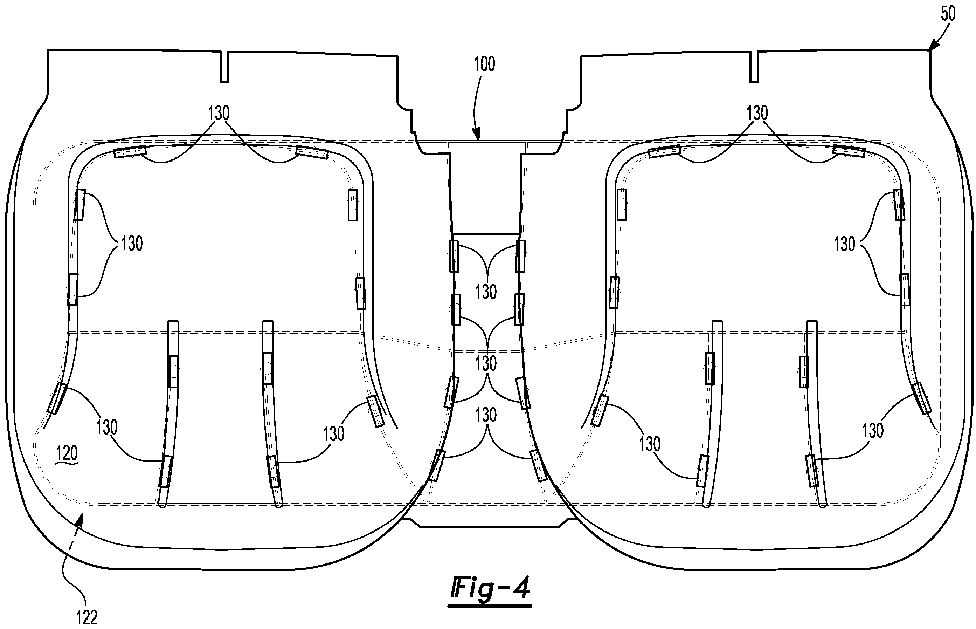

Referring to Figure 4, a magnified view of an example of a cushion 50 is shown. The cushion is generically designated with reference number 50 for convenience in reference. It is to be understood that the structure and description of the cushion 50 is applicable to the cushion 32 of the seat bottom 20, the cushion 42 of the seat back 22, or both.

The cushion 50 is a non-foam component or includes at least one non-foam component. The non-foam component is primarily referred to as a mesh member but may also be referred to as a stranded member, looped member, entangled member, filament mesh structure, mesh structure, stranded mesh, looped mesh, entangled mesh, or mesh cushion. In Figure 4, the cushion 50 is depicted as a non-foam component that does not include a foam component or foam material, such as urethane or polyurethane foam; however, it is contemplated that the cushion 50 may also include a foam component or foam material in addition to a non-foam component to provide additional cushioning or localized cushioning for a seat occupant. For example, foam material may be provided between the cushion 50 and a trim cover (e.g., trim cover 34, 44) that is disposed on the cushion 50, within the cushion 50, or combinations thereof. Reducing the amount of foam material that is provided with the cushion 50 or eliminating foam material from the cushion 50 reduces weight and may improve support and comfort of a seat occupant. In addition, eliminating foam material may facilitate recycling of the cushion 50.

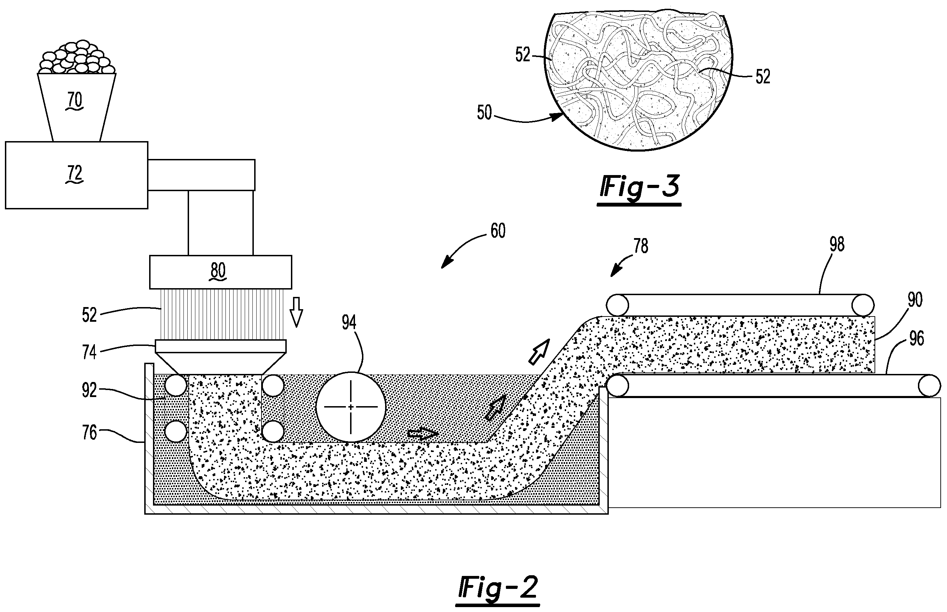

The cushion 50 is described below in the context of a cushion 50 that does not include foam material. In this context, the cushion 50 is made of filaments 52 of polymeric material that are randomly looped, bent, curled, or entangled and are bonded together as will be discussed in more detail below. An example of filaments 52 is shown in Figure 3. A filament 52 is directly bonded to another filament 52 rather than being indirectly bonded with a resin or other intermediate material.

The filaments 52, which may also be referred to as strands or threads, are made of any suitable material or materials. In some configurations, the filaments 52 are made of a polymeric material or thermoplastic material, such as a thermoplastic resin that is polyamide-based, polyester-based, polyimide-based, polyolefin-based (e.g., polypropylene-based, polyethylene-based, etc.), polystyrene-based, or combinations thereof. As one example, a polyethylene-based filament may be made of linear low density polyethylene (LLPDE). The filament material may be recyclable unlike foam material or more easily recycled than foam material. It is also contemplated that a filament 52 may comprise reinforcement fibers and that the reinforcement fibers may not be made of a thermoplastic material.

In some configurations, a filament 52 may be a monofilament that is made of a single material. In some configurations, a filament 52 is made of multiple materials. As an example, a filament 52 made of multiple materials may include a core that is made of a first thermoplastic material and a sheath that encircles the core and is made of a second thermoplastic material that differs from the first thermoplastic material. It is contemplated that the cushion 50 may include a combination of monofilaments and filaments that are made of multiple materials and are not monofilaments.

Filaments 52 that are randomly looped, bent, looped, curled, or entangled are bonded together where one filament 52 contacts another filament 52, thereby resulting in a lightweight, air permeable cushion (e.g., cushion 32 and/or 42) or mesh structure having openings or voids between the filaments 52. An example of a manufacturing system 60 of making a cushion or filament mesh structure is also shown in Figure 2. In this example, the manufacturing system 60 includes a material supply 70, an extruder 72, and a funnel 74. The manufacturing system 60 also includes a cooling tank 76 and a material handling subsystem 78.

Referring to Figure 2, the material supply 70 holds material stock that is to be extruded, such as solid beads, flakes, granules, pellets, or powder made of the material. In some configurations, the material supply 70 is configured as a container or hopper. The material supply 70 provides material stock to the extruder 72.

The extruder 72 melts the material stock and extrudes the material stock into a set of filaments 52. The extruder 72 may have any suitable configuration. In some configurations, the extruder 72 includes a barrel that receives a rotatable screw and heating elements. Rotation of the screw forces the material to move through the barrel and helps heat the material due to the friction generated as the screw rotates. The material exits the barrel under pressure and in a molten state and is transported under pressure to a die 80 of the extruder 72.

The die 80, which may also be referred to as a die plate or extrusion die, has multiple through holes or filament forming openings through which the molten material passes. A single filament 52 is extruded from each through hole. The filaments 52 fall downward from the die 80 under the force of gravity into the funnel 74.

The funnel 74 consolidates or groups the filaments 52 into a more compact arrangement in which the filaments bend, curl, or loop and a filament 52 contacts and bonds to at least one other filament 52. The funnel 74 has an inlet opening or funnel inlet and an outlet opening or funnel outlet that is smaller than the funnel inlet. Individual separated filaments 52 enter the funnel inlet. The filaments 52 bend, curl, or loop and move into contact as they accumulate. The filaments 52 move through the funnel 74 toward the funnel outlet. Some filaments may slide along the funnel 74 or an intervening sheet that is disposed on the funnel 74 as the filaments move toward the funnel outlet. Bonds are formed between filaments 52 at the points of contact while openings or voids between filaments 52 are present at other locations where one filament 52 does not contact or bond to another filament 52. The entangled and bonded filaments 52 pass through the funnel outlet of the funnel 74 and enter the cooling tank 76. For convenience in reference, the bonded filaments 52 are referred to as a mesh member or filament mesh structure 90.

The cooling tank 76 holds a liquid, such as water or a mixture of water and another fluid. The liquid in the cooling tank 76 helps support the entangled and bonded filaments 52 to limit further compacting or consolidation of the filaments 52 into a less open or less porous arrangement and maintains a desired porosity and density of the filament mesh structure 90. Thus, the liquid provides some buoyancy or resistance that can result in additional bending, curling, or looping of the filaments 52 adjacent to the surface of the liquid or within the funnel 74 to further build the filament mesh structure 90. The liquid also cools the filaments 52 when the filaments 52 are in the liquid. For instance, the liquid cools the filaments 52 from the outside to solidify the filaments 52 and prevent the filaments 52 from bonding at additional locations. At this point, the filaments 52 are relatively stiff and no longer in a plastic state and thus generally maintain a shape and are not moldable or reformable without being reheated.

The material handling subsystem 78 transports the filament mesh structure 90 through the cooling tank 76. The material handling subsystem 78 includes various rollers and conveyors that help move the filament mesh structure 90 through the liquid and out of the liquid. In some configurations, a tractor conveyor 92 is provided in the cooling tank 76 to help pull the filament mesh structure 90 away from the funnel 74 and to counter buoyancy of the filaments 52.

One or more other rollers, such as roller 94, keep the filament mesh structure 90 submerged in the liquid and guide the filament mesh structure 90 through the cooling tank 76. For example, the roller 94 may guide the filament mesh structure 90 toward a conveyor belt 96 and shaker table 98 that are disposed outside of the cooling tank 76. The shaker table 98 shakes the filament mesh structure 90 while it is on the conveyor belt 96 to remove liquid. Alternatively or in addition, the filament mesh structure 90 may be squeezed to remove liquid, air may be blown toward the filament mesh structure 90 to help remove liquid from the filament mesh structure 90, or both. It is also contemplated that the filament mesh structure 90 may also be allowed to drip dry, or dry in ambient air.

The manufacturing system 60 described above is a continuous flow process in which the filament mesh structure 90 is formed as a continuous structure when filament extrusion is not interrupted. Further processing of the filament mesh structure 90 is provided after exiting the cooling tank 76 to cut the filament mesh structure 90 into individual pieces or blanks for individual cushions. Such processing is conducted by a cutting system of the manufacturing system 60. The cutting system may be of any suitable type. For instance, the cutting system may employ a blade, knife, hot knife, saw, fluid jet, or the like to cut the filaments 52 of the filament mesh structure 90 into a blank. The cutting system may be used to shape or contour the blank. It is also contemplated that a blank may be further shaped or contoured with other manufacturing processes, such as molding of the entire blank or a portion thereof.

With the above process, the cushion 50 may be formed of a set of filaments 52, wherein at least two members of the set of filaments 52 are looped and bonded to each other. In one or more embodiments, each member of the set of filaments 52 is looped and bonded to at least one other member of the set of filaments 52.

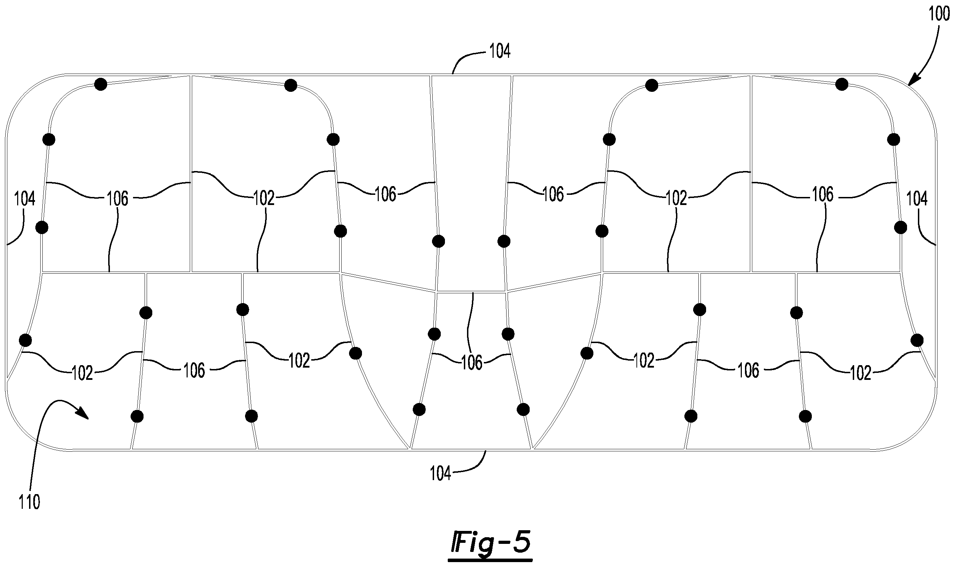

An example of a seat assembly will now be described in more detail. The seat assembly includes a carrier structure 100, an example of which is best shown in Figure 5. The carrier structure 100 comprises a set of elongated members 102 (e.g., wires, rods, shafts, tubes, etc.). An elongated member 102 may be made of any suitable material or materials, such as metal, a polymeric material, or both. Each member of the set of elongated members 102 is attached to at least one other member of the set of elongated members 102. In some configurations, the set of elongated members 102 comprises a perimeter frame 104 and one or more cross members 106. For clarity, each elongated member 102 and cross member 106 is not individually numbered in Figure 5.

The perimeter frame 104 surrounds an enclosed area 110. For instance, the perimeter frame 104 may comprise one or more elongated members 102 and surrounds, encloses, or bounds an area or enclosed area 110 that is located underneath or behind the cushion 50 when the cushion 50 is disposed on the carrier structure 100. The enlarged points or dots in Figure 5 represent examples of locations where a trim cover may be secured to the carrier structure 100 and more specifically to an elongated member 102 that is a cross member 106. In addition, the perimeter frame 104 is depicted as having a generally rectangular configuration that extends continuously around the enclosed area 110.

One or more cross members 106 extend from the perimeter frame 104. A cross member 106 may extend from the perimeter frame 104 toward or into the enclosed area 110. In some configurations, a cross member 106 may extend from the perimeter frame 104 across the enclosed area 110 and may be attached (e.g., affixed, fixedly coupled, fixedly joined) to the perimeter frame 104 at opposing ends. In some configurations, a cross member 106 may extend from the perimeter frame 104 and may be attached to at least one other elongated member 102, such as another cross member 106. As an example, a cross member 106 may be attached to the perimeter frame 104 at a first end and may be attached to another cross member 106 at a second end that is disposed opposite the first end. In some configurations, a cross member 106 may extend from one cross member 106 to another cross member 106. As an example, a cross member 106 may be attached to a first cross member 106 at a first end and may be attached to a second cross member 106 at a second end that is disposed opposite the first end. Thus, a cross member 106 may not be directly attached to the perimeter frame 104. Voids or open spaces may be provided between cross members 106 and between a cross member 106 and the perimeter frame 104 where elongated members 102 are not present.

Referring to Figure 4, the cushion 50 is disposed on the carrier structure 100. In Figure 4, a majority of the carrier structure 100 is hidden underneath the cushion 50 from the perspective shown. The cushion 50 may include a first side 120 and a second side 122.

The first side 120 may face away from the carrier structure 100. For instance, the first side 120 may face toward an associated trim cover or seat occupant. In some configurations, the first side 120 engages or contacts the trim cover.

The second side 122 is disposed opposite the first side 120. As such, the second side 122 may face toward the carrier structure 100 and may engage or contact the carrier structure 100. Thus, the second side 122 may be a back side or underside of the cushion 50 that faces away from a seat occupant that is disposed on or seated on the seat assembly 10. The carrier structure 100 may be disposed outside of the cushion 50. For instance, the carrier structure 100 may not be disposed inside the cushion 50, may not extend into or through the cushion 50, and may not be encapsulated in the cushion 50. Such a configuration may allow the cushion 50 and carrier structure 100 to be manufactured separately and may facilitate recycling as the cushion 50 and the carrier structure 100 may be easily separated and separately recycled, such as when the cushion 50 and the carrier structure 100 are made of different materials that cannot be recycled together. In contrast, a carrier structure 100 that is disposed inside the cushion 50 may need to be removed from the cushion 50 to facilitate recycling of the cushion 50 and the carrier structure 100.

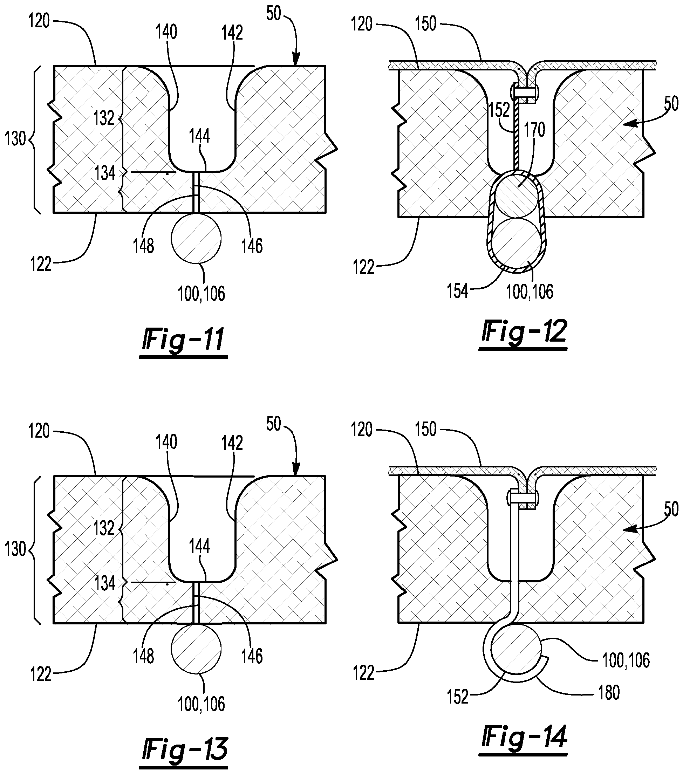

The cushion 50 may comprise one or more slits 130 (e.g., apertures, openings, through holes) that extend through the cushion 50 from the first side 120 to the second side 122. In Figure 4, examples of slits 130 are represented by short thick line segments that extend from an enlarged point or dot. In some configurations, a slit 130 may be configured as a cut in the cushion 50 that extends from the first side 120 to the second side 122. It is also contemplated that a slit 130 may be configured with a non-constant width. An example of such a slit 130 is shown in Figure 11 and other figures. In Figure 11, the slit 130 comprises a trench 132 and a connecting portion 134. The trench 132 extends from the first side 120 partially toward the second side 122. The connecting portion 134 extends from the trench 132 to the second side 122.

The width of the trench 132 is illustrated as being greater than the width of the connecting portion 134. For instance, the trench 132 may include a first trench side 140 and a second trench side 142 that extend from the first side 120, are disposed opposite each other, and that are spaced apart from each other such that a gap is provided between the first trench side 140 and the second trench side 142. In some configurations, the trench 132 may comprise a bottom trench side 144 that extends between the first trench side 140 to the second trench side 142. The connecting portion 134 may have a width that is less than the width of the trench 132. For instance, the connecting portion 134 may include a first connecting portion side 146 and a second connecting portion side 148 that are disposed opposite each other. The width of the trench 132 may extend from the first trench side 140 to the second trench side 142. The width of the connecting portion 134 may extend from the first connecting portion side 146 to the second connecting portion side 148. The first connecting portion side 146 may be disposed closer to the second connecting portion side 148 than the first trench side 140 is disposed to the second trench side 142. In some configurations, the first connecting portion side 146 may contact the second connecting portion side 148 when an object is not inserted therebetween.

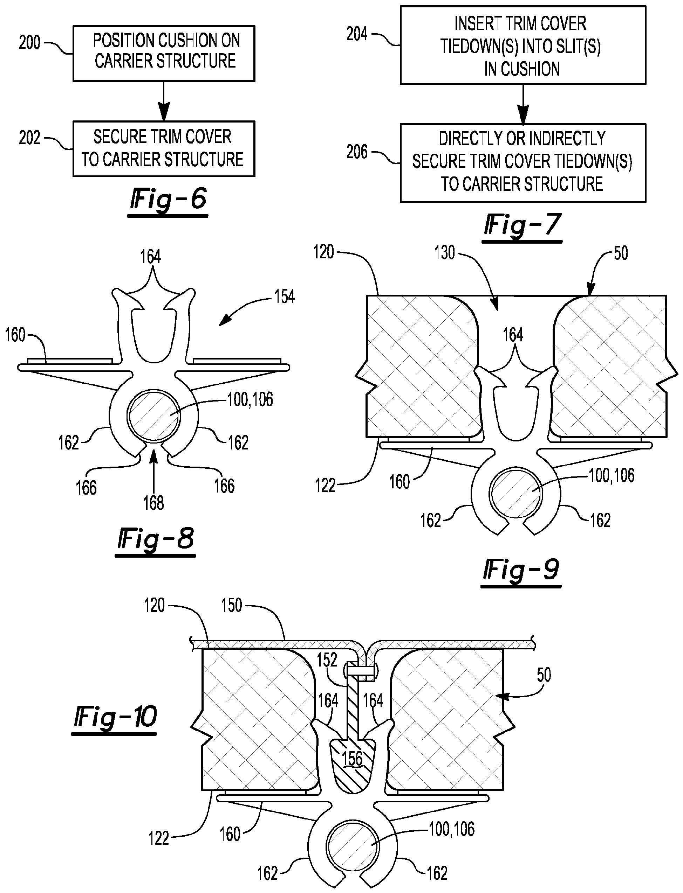

Referring to Figure 6, a flowchart of a method of making a seat assembly is shown. For convenience in reference, the method is primarily described in the context of the seat bottom 20. In this context, the carrier structure 100 may be provided with the seat bottom frame 30, the cushion may be the cushion 32 of the seat bottom 20, and the trim cover may be the trim cover 34 of the seat bottom 20; however, it is contemplated that these designations may be associated with the seat back 22, in which case the carrier structure 100 may be provided with the seat back frame 40, the cushion may be the cushion 42 of the seat back 22, and the trim cover may be the trim cover 44 of the seat back 22. For clarity, the method steps in examples below continue to refer to the cushion generically using reference number 50. In addition, the trim cover is generically designated with reference number 150 for convenience in reference. It is to be understood that the structure and description of the trim cover 150 is applicable to the trim cover 34 of the seat bottom 20, the trim cover 44 of the seat back 22, or both.

At block 200, the cushion 50 is positioned on the carrier structure 100. The cushion 50 is positioned on the carrier structure 100 by placing the second side 122 of the cushion 50 in contact or engagement with the carrier structure 100. The carrier structure 100 may not be received inside the cushion 50 when the cushion 50 is placed on the carrier structure 100 as previously discussed.

At block 202, the trim cover 150 is secured to the carrier structure 100. The trim cover 150 may be secured to the carrier structure 100 when the trim cover 150 is disposed on or positioned on the cushion 50. In some configurations, securing the trim cover 150 to the carrier structure 100 includes positioning the trim cover 150 on the cushion 50 after the cushion 50 is positioned on the carrier structure 100. Positioning the trim cover 150 on the cushion 50 after the cushion 50 is positioned on the carrier structure 100 may allow the relative positioning of the cushion 50 with respect to the carrier structure 100 to be established so that a slit 130 in the cushion 50 is aligned with an elongated member 102 of the carrier structure 100. It is also contemplated that the trim cover 150 or a portion thereof may be placed on the cushion 50 before the cushion 50 is placed on the carrier structure 100.

The trim cover 150 may be secured to the carrier structure 100 in various ways and with various steps as is expanded upon in Figure 7. Securing the trim cover 150 to the carrier structure 100 is primarily discussed with respect to securing the trim cover 150 to the carrier structure 100 via a slit 130 in the cushion 50 to help conform the trim cover 150 to the contour of the first side 120 of the cushion 50. Such securing may be accomplished with a trim cover tie-down (e.g., strap, strip, cord, ribbon, etc.) that is provided with or extend from the trim cover 150. Some examples of trim cover tie-downs 152 are shown in Figures 10, 12, and 14. A trim cover tie-down 152 is coupled to the trim cover 150. For instance, a trim cover tie-down 152 may be coupled to a side of the trim cover that faces away from a seat occupant and toward the cushion 50. A trim cover tie-down 152 may be attached or coupled to the trim cover 150 in any suitable manner, such as with a fastener, stitching, adhesive, or combinations thereof.

At block 204, the trim cover tie-down 152 is inserted into a slit 130 in the cushion 50. In some configurations, one or more trim cover tie-downs 152 may be inserted into a corresponding slit 130 before the trim cover 150 is wrapped or stretched around the perimeter of the cushion 50. The trim cover tie-down 152 may extend completely through the slit 130 or partially through the slit 130.

At block 206, the trim cover tie-down 152 is secured to the carrier structure 100. The trim cover tie-down 152 may be secured to the carrier structure 100 in various ways. For instance, the trim cover tie-down 152 may be directly secured to the carrier structure 100 or indirectly secured to the carrier structure 100.

A trim cover tie-down 152 may be directly secured to the carrier structure 100 when the trim cover tie-down 152 extends to the carrier structure 100 and is directly coupled to the carrier structure 100, such as without an intervening separate component. In such a configuration, the trim cover tie-down 152 may contact the carrier structure 100 and may be tied to, grasp, hook onto, or otherwise be fastened directly to the carrier structure 100. In such a configuration, the trim cover tie-down 152 may extend through the slit 130 such that the trim cover tie-down 152 reaches the carrier structure 100 or a cross member 106 of the carrier structure 100 and may extend or protrude out of the slit 130 from the second side 122 of the cushion 50. The trim cover tie-down 152 may be coupled directly to the carrier structure 100 or cross member 106 after inserting the trim cover tie-down 152 through the slit 130. In some configurations, the trim cover tie-down 152 is coupled to the carrier structure 100 outside of the slit 130, which may facilitate assembly. In some configurations, the trim cover tie-down 152 is not coupled to the perimeter frame 104.

A trim cover tie-down 152 may be indirectly secured to the carrier structure 100 when the trim cover tie-down 152 does not extend to the carrier structure 100 but instead is indirectly coupled to the carrier structure 100 by way of a separate intervening component. The intervening component is referred to as a trim cover attachment feature 154, some examples of which are shown in Figures 8 and 12. The trim cover attachment feature 154 couples the trim cover tie-down 152 to the carrier structure 100. As such, the trim cover tie-down 152 may extend to, engage, or contact the trim cover attachment feature 154 and may be coupled to, extend to, engage, or contact the trim cover attachment feature 154. The trim cover attachment feature 154 may extend into the slit 130 and extend to and may be coupled to the carrier structure 100, such as to a cross member 106 of the carrier structure 100.

The trim cover attachment feature 154 may have any suitable configuration, such as a fastener, clip, hog ring, hook, hook and loop fastener, or the like. In some configurations, the trim cover tie-down 152 and the trim cover attachment feature 154 are disposed in the slit 130. In some configurations, the trim cover tie-down 152 is coupled to the trim cover attachment feature 154 inside the slit 130, which may help position the interface between the trim cover tie-down 152 and the trim cover attachment feature 154 sufficiently deep in the slit 130 or at a sufficient depth in the cushion 50 from the first side 120 so as not to be felt by a seat occupant and so as not to create a visible bulge or protrusion in the trim cover 150. In addition, positioning the interface between the trim cover tie-down 152 in the trim cover attachment feature 154 in such a location may help prevent disengagement of the trim cover tie-down 152 from the trim cover attachment feature 154. In some configurations, the trim cover attachment feature 154 is not coupled to the perimeter frame 104.

In some configurations, positioning the cushion 50 on the carrier structure 100 comprises positioning the trim cover attachment feature 154 in the slit 130. For instance, the trim cover attachment feature 154 or a portion thereof may protrude into the slit 130 from the second side 122 of the cushion 50 and may extend toward the first side 120 of the cushion 50. Positioning the trim cover attachment feature 154 or a portion thereof in the slit 130 may allow the trim cover attachment feature 154 to act as a locating feature that may help position the cushion 50 in a desired location with respect to the carrier structure 100.

In some configurations, the trim cover attachment feature 154 is attached to the carrier structure 100 or cross member 106 of the carrier structure 100 before positioning the cushion 50 on the carrier structure 100. For instance, the trim cover attachment feature 154 may be attached to the carrier structure 100 before positioning the cushion 50 on the carrier structure 100 when the trim cover attachment feature 154 is difficult to fit through the slit 130 or is sized to prevent the trim cover attachment feature 154 from fitting through the slit 130.

A plurality of trim cover attachment features 154 may be attached to the carrier structure 100. For instance, a first trim cover attachment feature 154 and a second trim cover attachment feature 154 may be attached at different locations to the carrier structure 100. In some configurations, the first trim cover attachment feature 154 may extend into a first slit 130 in the cushion 50 and the second trim cover attachment feature 154 may extend into a second slit 130 in the cushion 50 before securing the trim cover 150 to the carrier structure 100. The first trim cover attachment feature 154 may cooperate with the first slit 130 and the second trim cover attachment feature 154 may cooperate with the second slit 130 to inhibit movement of the cushion 50 with respect to the carrier structure 100. For example, the first and second trim cover attachment features 154, 154 may be secured to the carrier structure 100 and may extend into the connecting portions 134 of corresponding slits 130 such that the first and second trim cover attachment features 154, 154 may engage the cushion 50 in the corresponding slits 130 and help limit movement (e.g., rotation or translation of the cushion 50 in one or more directions) of the cushion 50 with respect to the carrier structure 100.

Referring to Figures 8-14, some examples that depict a method of making a seat assembly in accordance with Figures 5 and 6 are shown. In these examples, only a portion of the cushion 50, the carrier structure 100, and the trim cover 150 are illustrated for simplicity.

Referring to Figures 8-10, a first example is shown in which the trim cover 150 is indirectly secured to the carrier structure 100 via a trim cover attachment feature 154.

In Figure 8, the trim cover attachment feature 154 is secured to the carrier structure 100, such as to a cross member 106 of the carrier structure 100. The trim cover attachment feature 154 is depicted as a trim clip that includes a base or footing 160, at least one hook 162, and at least one engagement feature 164.

The hook or hooks 162 are configured to grasp the cross member 106. In the configuration shown, two hooks 162 are illustrated that partially wrap around or partially encompass or encircle the cross member 106. Each hook 162 has a distal end 166. The distal ends 166 are spaced apart from each other such that a gap 168 is provided therebetween. The cross member 106 may be inserted through the gap 168 such that the cross member 106 enters the cavity or opening between the hooks 162 and is captured therebetween. For instance, the hooks 162 may flex apart upon application of sufficient force against the cross member 106 and permit the cross member 106 to pass through the gap 168 and be captured or grasped by the hooks 162.

In Figure 9, the cushion 50 is positioned on the carrier structure 100. The slit 130 in the cushion 50 may be aligned with trim cover attachment feature 154 such that at least one engagement feature 164 is aligned with the slit 130 and is insertable into the slit 130. The second side 122 of the cushion 50 may engage or contact the footing 160. The trim cover attachment feature 154 or a portion thereof is disposed between the cushion 50 and the carrier structure 100. For instance, the footing 160 of the trim cover attachment feature 154 may be positioned between or sandwiched between the cushion 50 and the carrier structure 100, which may help keep the trim cover attachment feature 154 pressed against the second side 122 of the cushion 50 to maintain the orientation of the trim cover attachment feature 154, maintain the positioning of the trim cover attachment feature 154 in the slit 130, or both. At least one engagement feature 164 may be inserted into the slit 130 and extend partially toward the first side 120 of the cushion 50.

In Figure 10, the trim cover 150 is secured to the carrier structure 100 via or by way of the trim cover attachment feature 154. The trim cover tie-down 152 is inserted into the slit 130 and advanced to engage the engagement feature 164. In the configuration shown, the trim cover tie-down 152 is inserted between a pair of engagement features 164 that are configured as barbs or with barbs that form a narrow opening through which an enlarged end 170 of the trim cover tie-down 152 is inserted. For example, the engagement features 164 may flex apart from each other when the enlarged end 156 is inserted between the narrow opening between the barbs, thereby allowing the enlarged end 156 enter the cavity or void between the engagement features 164. The engagement features 164 may flex back toward each other once the enlarged end 156 is received in the cavity and the barbs may resist removal of the enlarged end 156 from the cavity, thereby securing the trim cover tie-down 152 to the trim cover attachment feature 154.

Referring to Figures 11 and 12, a second example is shown in which the trim cover 150 is indirectly secured to the carrier structure 100 via a trim cover attachment feature 154 that is configured as a ring, such as a hog ring.

In Figure 11, the cushion 50 is positioned on the carrier structure 100. The slit 130 in the cushion 50 may be aligned with a cross member 106 of the carrier structure 100. The second side 122 of the cushion 50 may be placed in engagement or contact with the cross member 106.

In Figure 12, the trim cover 150 is secured to the carrier structure 100 via or by way of the trim cover attachment feature 154. The trim cover tie-down 152 is inserted into the slit 130 and advanced toward the cross member 106 of the carrier structure 100. The trim cover attachment feature 154 is wrapped around, tied around, or crimped around the enlarged end 170 of the trim cover tie-down 152 and a cross member 106 of the carrier structure 100, thereby securing the trim cover tie-down 152 to the cross member 106.

Referring to Figures 13 and 14, a third example is shown in which the trim cover 150 and more specifically the trim cover tie-down 152 of the trim cover 150 is directly secured to the carrier structure 100, and more specifically secured to a cross member 106 of the carrier structure 100.

In Figure 13, the cushion 50 is positioned on the carrier structure 100 in a similar manner as in Figure 11.

In Figure 14, the trim cover tie-down 152 of the trim cover 150 is directly secured to the cross member 106. The trim cover tie-down 152 is configured with a fastening feature 180 that engages the cross member 106 of the carrier structure 100. The fastening feature 180 may have a male configuration, a female configuration, or combinations thereof. In the configuration shown, the fastening feature 180 is configured as a hook that is configured to extend partially around the cross member 106. The trim cover tie-down 152 is inserted into the slit 130 and advanced through the slit 130 toward the cross member 106. The fastening feature 180 protrudes past the second side 122 of the cushion 50 and engages the cross member 106. For instance, the fastening feature 180 may be maneuvered to latch or hook onto the cross member 106, thereby securing the trim cover tie-down 152 to the cross member 106.

Clause 1. A seat assembly comprising: a cushion comprising a mesh member, the mesh member comprising a set of filaments of polymeric material, wherein at least two members of the set of filaments are looped and bonded to each other, a carrier structure comprising a set of elongated members, wherein each member of the set of elongated members is attached to at least one other member of the set of elongated members, and wherein the cushion is disposed on the carrier structure; and a trim cover disposed on the cushion and secured to the carrier structure.

Clause 2. The seat assembly of clause 1 wherein the carrier structure is disposed outside of the cushion.

Clause 3. The seat assembly of any preceding clause wherein the cushion includes a first side and a second side disposed opposite the first side, wherein the first side engages the trim cover and the second side engages the carrier structure.

Clause 4. The seat assembly of clause 3 wherein the cushion comprises a slit extending through the cushion from the first side to the second side, the trim cover further comprising a trim cover tie-down coupled to the trim cover and extending into the slit, and a trim cover attachment feature, the trim cover attachment feature coupling the trim cover tie-down to the carrier structure.

Clause 5. The seat assembly of clause 4 wherein the trim cover tie-down and the trim cover attachment feature are disposed in the slit.

Clause 6. The seat assembly of clause 4 or clause 5 wherein the trim cover tie-down is coupled to the trim cover attachment feature inside the slit.

Clause 7. The seat assembly of clause 4, clause 5, or clause 6 wherein the set of elongated members comprises a perimeter frame that surrounds an enclosed area and a cross member that extends from the perimeter frame into the enclosed area, wherein the trim cover attachment feature is secured to the cross member.

Clause 8. The seat assembly of clause 7 wherein the trim cover tie-down is not coupled to the perimeter frame.

Clause 9. The seat assembly of any one of clauses 4 to 8 wherein the trim cover attachment feature is between the carrier structure and the cushion.

Clause 10. The seat assembly of clause 3 wherein the cushion comprises a slit extending through the cushion from the first side to the second side, and the trim cover further comprises a trim cover tie-down coupled to the trim cover, extends through the slit, and is directly secured to the carrier structure.

Clause 11. A method of making a seat assembly, the method comprising: positioning a cushion on a carrier structure, wherein the cushion comprises a mesh member, the mesh member comprising a set of filaments of polymeric material wherein at least two members of the set of filaments are looped and bonded to each other, and wherein the carrier structure comprises a set of elongated members, wherein each member of the set of elongated members is attached to at least one other of the set of elongated members; and securing a trim cover to the carrier structure, wherein the trim cover is disposed on the cushion.

Clause 12. The method of clause 11 wherein positioning the cushion on the carrier structure further comprises positioning a second side of the cushion on the carrier structure such that the carrier structure is not received inside the cushion.

Clause 13. The method of clause 11 or clause 12 wherein securing the trim cover to the carrier structure further comprises positioning the trim cover on the cushion after the cushion is positioned on the carrier structure.

Clause 14. The method of any one of clauses 11 to 13 wherein securing the trim cover to the carrier structure further comprises inserting a trim cover tie-down of the trim cover into a slit in the cushion, the slit extending from a first side of the cushion that faces toward the trim cover to a second side of the cushion that is disposed opposite the first side and that engages the carrier structure.

Clause 15. The method of clause 14 wherein securing the trim cover to the carrier structure further comprises coupling the trim cover tie-down directly to the carrier structure after inserting the trim cover tie-down through the slit.

Clause 16. The method of clause 14 wherein securing the trim cover to the carrier structure further comprises coupling the trim cover tie-down to the carrier structure with a trim cover attachment feature that engages the trim cover tie-down and the carrier structure.

Clause 17. The method of clause 14 wherein securing the trim cover to the carrier structure further comprises coupling the trim cover tie-down to the carrier structure with a trim cover attachment feature that engages the trim cover tie-down and the carrier structure, wherein the trim cover tie-down is coupled to the trim cover attachment feature inside the slit.

Clause 18. The method of clause 14, clause 16, or clause 17 further comprising attaching a trim cover attachment feature to the carrier structure before positioning the cushion on the carrier structure.

Clause 19. The method of clause 18 wherein positioning the cushion on the carrier structure further comprises positioning the trim cover attachment feature in the slit.

Clause 20. The method of clause 18 or clause 19 wherein attaching the trim cover attachment feature to the carrier structure further comprises attaching a second trim cover attachment feature to the carrier structure and positioning the cushion on the carrier structure further comprises positioning the second trim cover attachment feature in a second slit before securing the trim cover to the carrier structure, wherein the trim cover attachment feature and the second trim cover attachment feature cooperate with the slit and the second slit, respectively, to inhibit movement of the cushion with respect to the carrier structure.

While exemplary embodiments are described above, it is not intended that these embodiments describe all possible forms according to the disclosure. In that regard, the words used in the specification are words of description rather than limitation, and it is understood that various changes may be made without departing from the spirit and scope of the disclosure. Additionally, the features of various implementing embodiments may be combined to form further embodiments according to the disclosure.

## Claims

1. A seat assembly comprising:
a cushion comprising a mesh member, the mesh member comprising a set of filaments of polymeric material, wherein at least two members of the set of filaments are looped and bonded to each other,
a carrier structure comprising a set of elongated members, wherein each member of the set of elongated members is attached to at least one other member of the set of elongated members, and wherein the cushion is disposed on the carrier structure; and
a trim cover disposed on the cushion and secured to the carrier structure.

2. The seat assembly of claim 1 wherein the carrier structure is disposed outside of the cushion.

3. The seat assembly of any of claims 1 or 2, wherein the cushion includes a first side and a second side disposed opposite the first side, wherein the first side engages the trim cover and the second side engages the carrier structure.

4. The seat assembly of claim 3 wherein the cushion comprises a slit extending through the cushion from the first side to the second side, the trim cover further comprising a trim cover tie-down coupled to the trim cover and extending into the slit, and a trim cover attachment feature, the trim cover attachment feature coupling the trim cover tie-down to the carrier structure.

5. The seat assembly of claim 4 wherein the trim cover tie-down and the trim cover attachment feature are disposed in the slit,
preferably wherein the trim cover tie-down is coupled to the trim cover attachment feature inside the slit.

6. The seat assembly of claim 4 wherein the set of elongated members comprises a perimeter frame that surrounds an enclosed area and a cross member that extends from the perimeter frame into the enclosed area, wherein the trim cover attachment feature is secured to the cross member,
preferably wherein the trim cover tie-down is not coupled to the perimeter frame
and/or the trim cover attachment feature is between the carrier structure and the cushion.

7. The seat assembly of claim 3 wherein the cushion comprises a slit extending through the cushion from the first side to the second side, and the trim cover further comprises a trim cover tie-down coupled to the trim cover, extends through the slit, and is directly secured to the carrier structure.

8. A method of making a seat assembly, the method comprising:
positioning a cushion on a carrier structure, wherein the cushion comprises a mesh member, the mesh member comprising a set of filaments of polymeric material wherein at least two members of the set of filaments are looped and bonded to each other, and wherein the carrier structure comprises a set of elongated members, wherein each member of the set of elongated members is attached to at least one other of the set of elongated members; and
securing a trim cover to the carrier structure, wherein the trim cover is disposed on the cushion.

9. The method of claim 8 wherein positioning the cushion on the carrier structure further comprises positioning a second side of the cushion on the carrier structure such that the carrier structure is not received inside the cushion.

10. The method of claim 8 or 9, wherein securing the trim cover to the carrier structure further comprises positioning the trim cover on the cushion after the cushion is positioned on the carrier structure.

11. The method of any of claims 8 to 10, wherein securing the trim cover to the carrier structure further comprises inserting a trim cover tie-down of the trim cover into a slit in the cushion, the slit extending from a first side of the cushion that faces toward the trim cover to a second side of the cushion that is disposed opposite the first side and that engages the carrier structure.

12. The method of claim 11, wherein securing the trim cover to the carrier structure further comprises coupling the trim cover tie-down directly to the carrier structure after inserting the trim cover tie-down through the slit.

13. The method of claim 11, wherein securing the trim cover to the carrier structure further comprises coupling the trim cover tie-down to the carrier structure with a trim cover attachment feature that engages the trim cover tie-down and the carrier structure,
wherein preferably the trim cover tie-down is coupled to the trim cover attachment feature inside the slit.

14. The method of claim 11, further comprising attaching a trim cover attachment feature to the carrier structure before positioning the cushion on the carrier structure.

15. The method of claim 14, wherein positioning the cushion on the carrier structure further comprises positioning the trim cover attachment feature in the slit,
preferably wherein attaching the trim cover attachment feature to the carrier structure further comprises attaching a second trim cover attachment feature to the carrier structure and positioning the cushion on the carrier structure further comprises positioning the second trim cover attachment feature in a second slit before securing the trim cover to the carrier structure, wherein the trim cover attachment feature and the second trim cover attachment feature cooperate with the slit and the second slit, respectively, to inhibit movement of the cushion with respect to the carrier structure.
